# EUROPEAN PATENT SPECIFICATION

(11) **EP 2 417 287 B1**
(45) Date of publication and mention of the grant of the patent: **13.11.2013**
(21) Application number: 10710322.8
(22) Date of filing: 24.03.2010
(51) Int. Cl.: D01F 1/10, D01F 6/04, D01F 6/06, D01F 6/46

(54) **A TEXTILE PRODUCT (E.G. AN INSECTICIDE NET)**
TEXTILPRODUKT (Z.B. MOSKITONETZ)
PRODUIT TEXTILE (PAR EXEMPLE UN FILET INSECTICIDE)

(30) Priority: 06.04.2009 EP 09157435
(43) Date of publication of application: 15.02.2012
(73) Proprietor: Intelligent Insect Control, 34170 Castelnau Le Lez (FR)
(72) Inventor: SKOVMAND, Ole, F-34170 Castelnau Le Lez (FR)
(74) Representative: ZBM Patents ApS
(86) International application number: PCT/EP2010/053799
(87) International publication number: WO 2010/115709

(56) References cited:
- WO-A2-01/47567
- WO-A2-2007/085640
- US-A1- 2009 041 820

## Description

### FIELD OF THE INVENTION

The present invention relates to a polymer composition and a textile product (e.g. an insecticide net) made from the polymer composition comprising an active ingredient (e.g. an insecticide) solubilized in suitable oil and/or wax and wherein the oil and/or wax are also miscible in the matrix.

### BACKGROUND ART

Polymeric insecticidal compositions in the form of molded products like flea collars or cattle ear tags, pellets granulates or films have been widely used as means of providing a slow release, long term insecticide formulation which kills insects contacting or coming within close proximity of pellets, granules or film. Generally, these formulations are designed so that insecticide therein gradually diffuses to the surface of the polymer so that it will be transmitted to an insect coming into contact or close proximity therewith. Thus, over a period of time, the insecticide is released from the formulation until the pellets, granules or film is no longer effective in killing insects and must be replaced.

In many instances, it is desired to form useful articles from a thermoplastic composition. In certain applications, such thermoplastic compositions are used to make filaments and fibers which comprise one or more insecticides. These fibers can be cut into useful textile products such as mosquito bednets, tarpaulins, films or curtains. On release of the insecticide on the surface, these products kill insects and can either protect people against diseases which are transmitted by insects such as malaria or preventing nuisance for people.

Another application is where insecticide incorporated polymers have been used is in yarns for the protection of fruits against insects and as said above for the protection of humans against biting insects such as mosquitoes for many years.

During the last decade, pyrethroid (insecticide) treated mosquito nets have become the main method for malaria prevention in many malaria - endemic countries. Long lasting insecticidal (hereafter LLIN) nets are nets treated with insecticides at factory level where the insecticide is coated around or incorporated into the yarns. The nets typically resist multiple washes and its biological activity last as long as the net itself (2-3 years for polyester and 4-5 for polyethylene yarns and possible longer for polypropylene nets). The use of insecticidal net is a prevention tool that prevents transmission, i.e., that human get infected with the malaria protozoan parasite and that mosquitoes pick up the parasite from infected people. The parasites develop inside the mosquitoes and will be transferred during a later blood meal 10-14 days later, if the mosquito survives so long time. If humans use a net e.g. a bednet, the mosquito contacts the insecticidal net and hereby receives a mortal dosage of insecticide. The mosquito thus dies and hereby never reaches the human and infection is prevented.

Pyrethroid treated cloths, especially military uniforms, have also been known for long time. These treatments have so far been made by coatings (impregnations), but can technically also be made as polymer incorporation provided the resulting yarn can be used for make cloth. Such cloths can also be used for personal protection of any person against bites from insects and acarides (like ticks). Typically, the yarn used will then be a multifilament yarn.

Cloths and bednets are exposed to repeated washing during use, typically, cloths are washed more often than bednets. Therefore, it is important to be able to regulate the release rate of insecticide after washing to obtain a timed regeneration without exposing more insecticide at the surface than needed for the targeted effect.

Prior art describes the use of a solvent in the matrix of a flea collar (EP763325, Sumitomo). The collar is packed in vapor tight foil and upon opening, the solvent evaporates and the blooming process starts since the insecticide or repellent is no longer soluble in the matrix. This process is suitable for products that can be packed in vapor tight foils during storage and where the blooming process can be in a relatively short time as 3-6 months.

GB1480125 discloses low melting organic pesticidal materials into normally solid thermoplastic polymers and thereby to provide the resulting compositions and products and articles comprising the same. The low melting organic pesticidal material is incorporated in an amount at least sufficient to supply corresponding pesticidal activity to such compositions and products. On page 3 line 5 it is described that such resin in practice of the disclosure in the form of solid pieces of any shape or size from small particles to large chunks, including fine to coarse powder, molding granules, and chopped or cut pieces of fiber, filament, film. However, GB1480125 is not describing or suggesting ways to regulate and control the release of insecticides of e.g. pyrethroids, organophosphates and/or carbamates.

In US4680328 an insect-resistant polyethylene composition suitable for forming into and use as electrical cable jacketing, electrical junction boxes or drip irrigation tubing is disclosed. It describes the incorporation of insecticide into polyethylene (e.g. High-Density PolyEthylene (HDPE) and Low-Density PolyEthylene (LDPE) together with an additive belonging to chlorinated polyethylene and ethylene-n-butyl acrylate copolymer family for the acceptance of higher concentrations of insecticide, markedly improved long term retention of insecticide, and, in addition, has the physical properties desirable for end use as a useful article and necessary for processing into such articles. US4680328 is not describing or suggesting ways to regulate and controle the release of insecticides incorporated into polyethylene or polypropylene compositions.

Migration of insecticides is discussed in WO03063587. The use of an UV filter to accelerate migration of an insecticide is disclosed WO03063587 by Ole Skovmand (a laminated dispenser). The problem solved in WO03063587 was to improve existing tarpaulins (therein named dispensers) to make them more suitable for outdoor environments where such dispenser is exposed to high level of UV radiation. It claims the use of a migrating filter to protect the insecticide once it is at the surface. However, once the filter is migrated, insecticide migration becomes a blooming process. WO03063587 is neither suggesting nor disclosing ways to better regulate insecticide release from thermoplastic compositions.

In summary, the prior art has developed thermoplastic compositions of e.g. polyethylene comprising insecticides which can be shaped into useful products, such as also relevant herein; yarns and finished textile products (bednets, tarpaulins and cloths) and teaches how to integrate an insecticide into polymer matrix but have not solved the problem of regulation, control of blooming to obtain high shelf life of such products and obtaining a controlled release of the insecticide without compromising the physical characteristics of the end shaped products.

There are definite needs to further improve thermoplastic compositions comprising insecticides and biocides to obtain a longer term release of the insecticide or biocide.

US4680328 discloses a composition to be used for electrical cable jacketing (see e.g. claim 1).

An essential element of this electrical cable jacketing composition is the use of chlorinated polyethylene as additive (see e.g. point (b) of claim 1).

As known to the skilled person, chlorinated polyethylene is generally not suitable to be used in a textile product such as e.g. an insecticide net.

A reason for this relates to environmental concerns - such as e.g. that a textile product such as e.g. a net normally is recycled after use together with e.g. plastic bottles and other plastic material and use of chlorinated polyethylene would here generally be considered as environmental harmful. Further, it may also be considered as toxic in contact with humans. US4680328 does NOT describe a textile product such as e.g. a bednets, tarpaulins or cloths.

### SUMMARY OF THE INVENTION

The problem to be solved by the present invention is to provide insecticidal polyethylene and polypropylene compositions that can be used for products such as textile products and which have improved control of release of an active ingredient such as an insecticide or biocide from such polyethylene or polypropylene compositions over long time (4-7 years) and are more stable under storage conditions without compromising the physical characteristics (such as strength) of such compositions.

The insecticidal polyethylene and polypropylene composition can be used for example to produce yarn. The yarns can then be used for producing for example cloth, bed nets, agricultural nets or films which can kill insects.

The solution as described herein is based on what the present inventor identified as serious problems with the release rate for prior art known insecticide treated compositions. Prior art teaches the incorporating insecticides into thermoplastic compositions. In such products there is little control of the release of insecticides and what is then typically observed is simple migration of the insecticide as such. This release mechanism can be described as a blooming process, i.e. uncontrolled migration of the insecticide for at least for a part of the life time of the product. Consequently such products have disadvantages such as short storage life and also uncontrolled amount of insecticide on the surface of products mostly influenced by ambient temperature (thus no control). Such uncontrolled amount of insecticides can cause serious problems of skin irritations of humans when used as textile products in close contact with human skin.

Insecticide release from a polymer matrix is a complex phenomenon. It is mainly regulated by two mechanisms that depend on the solubility of the insecticide in the matrix and the glass temperature of the polymer matrix.

When the insecticide is not soluble in the thermoplastic polymer, the product will not store well and the higher the ambient temperature and the lower the glass temperature of the matrix, the faster the blooming process.

Therefore, it is important to be able to regulate the solubility of the insecticide in the matrix if is not well soluble by itself.

Migration rate of the insecticide from the matrix to the surface is influenced by the solubility of the insecticide in the matrix and temperature. Further, since polymers are pseudoplastic, the migration rate increases with temperature in a non-linear process. If the insecticide is soluble in the matrix, equilibrium will be established between surface concentration and the matrix concentration. After removal of the surface layer of insecticide e.g. by washing or rubbing, the migration rate will follow Ficks second law and be dependent on the total amount of insecticide in the matrix. Migration will stop when equilibrium is established between surface concentration and polymer matrix concentration.

This phenomenon applies for active ingredients as denoted in present invention and not only insecticides.

If the active ingredient is not soluble in the matrix, the process will be a blooming, e.g. the insecticide will migrate to the surface until the matrix is exhausted and no equilibrium will be established.

As mentioned above and described in WO03063587, an UV filter is proposed and capable of migrating through thermoplastic compositions. The most preferred UV filter was hydroxyl-benzophenon (line 1-5, page 14). Benzophenon-derivatives are very close to at least one part of most pyrethroid molecules and it is likely that the effect is based on increased solubility of the insecticide in the matrix. However, as written in WO03063587, the UV filter will migrate to the surface. As stated in WO03063587, page 14 line 17-18, Benzophenon-derivatives such as commercial name Chemissorb 81 (below C81) from the company Ciba Geigy, are observed to have migration promoting effects.

Without being limited to the theory, present inventor herein describes that the migration through thermoplastic compositions (polyethylene and polypropylene) of such small molecules is fast and probably faster than the insecticide, and the migration regulation will therefore change to a blooming process. C81 is partially similar to a part of the deltamethrin chemical formular and deltamethrin is therefore also soluble in C81 and also soluble in polyethylene compositions such as HPDE and is not a polyethylene oil or wax. It migrates out of the polymer matrix and hereby the control release of the suitable insecticide is lost. This is also shown in example 2.

Polyethylene compositions can be made from different polyethylene polymers; these are LDPE, LLDPE, MDPE and HDPE.

LDPE (linear density polyethylene) is defined by a density range of 0.910 - 0.940 g/cm³. Generally, LDPE has more branching (on about 2% of the carbon atoms) than HDPE, so its intermolecular forces (instantaneous-dipole induced-dipole attraction) are weaker, its tensile strength is lower, and its resilience is higher. Also, since its molecules are less tightly packed and less crystalline because of the side branches, its density is lower.

LLDPE (Linear low-density polyethylene is a substantially linear polymer (polyethylene), with significant numbers of short branches, commonly made by copolymerization of ethylene with longer-chain olefins.

MDPE is medium-density polyethylene is a substantially linear polymer of polyethylene with shorter chain length than HDPE. MDPE is defined by a density range of 0.926-0.940 g/cm3.

HDPE (High-Density PolyEthylene) or PolyEthylene High-Density (PEHD) is a polyethylene thermoplastic made from petroleum. HDPE has little branching, giving it stronger intermolecular forces and tensile strength than lower-density polyethylene. It is also harder and more opaque and can withstand somewhat higher temperatures (120 °C/ 248 °F for short periods, 110 °C /230 °F continuously). High-density polyethylene, unlike polypropylene, cannot withstand normally-required autoclaving conditions.

It is understood herein that polymers as such or mixtures thereof; LDPE, LLDPE, MDPE and HDPE are polyethylene compositions.

In the present invention, it is shown that what is needed is a change of the solubility of the active ingredient in the thermoplastic composition by using suitable molecules which will not migrate or at least migrate slower than the active ingredient. Such molecules must also be soluble in the matrix of the polymer.

The term matrix herein is denoted as the composite polymer with other additives than the active ingredient (insecticide or biocide)

The term polymer here is denoted as for example olefins and phthalates.

The present invention discloses herein that by using short chained polymers of the same type as the master polymer, the solubility problem can be solved provided the chain length is so short that the insecticide - if compatible - can be dissolved in the short chained polymer. Because of the solubility of the short chained polymer in the long chained polymer, the short chained polymer will not bloom. Hereby improved control of release of the active ingredient is obtained.

The term master polymer is denoted here as the polymer that determines the physic-chemical characters of the matrix and normally will make the dominant part of the matrix.

In polyethylene compositions shorter chained polymers such as LDPE and MDPE can be used in HDPE. Suitable active ingredients are soluble in LDPE and MDPE and mixtures thereof.

The disadvantage of using LDPE or LLDPE and MDPE which are short chain polyethylene compositions is that a relatively high concentration of these are needed to provide sufficient solubility of the active ingredient and this weakens the shaped products of such compositions such as yarn (loss of strength).

Instead as disclosed herein - and it is a surprising finding - polyethylene oils and polyethylene waxes can be used and eventually in additional with much lower concentrations of LDPE, MDPE, and LLDPE (short chain polyethylene compositions). The low concentration of such suitable polyethylene oils and polyethylene waxes will not weaken the physical characteristics of shaped end products from such polyethylene compositions such as yarns.

For polypropylene compositions, it is disclosed herein that polypropylene oils and polypropylene waxes can be used. Polypropylene oils and waxes of one polymer type can be used in the other if this is advantageous for solubility of the active ingredient or biocide. The concentration of polypropylene compositions used will also depend on the impact of polypropylene polymers to the strength of the polymer, e.g. tension strength.

One can also use suitable mixtures of polyethylene and polypropylene oils and waxes. This means that for a certain chosen active ingredient the skilled person can chose polyethylene wax and suitable polypropylene oil which is the optimal mixture to obtain a polyethylene or a polypropylene composition which releases the active ingredient in a controlled way, kills insects, stores well and have the required physical characteristics in terms of strength.

The most preferred solution is thus a "suitable" compromise between the solubility of a given active ingredient in a polymer, optimal as possible migration rate and a suitable physical strength.

In summary, present invention offer solutions to regulate the release rate of active ingredients from a polyethylene and also from polypropylene compositions, such compositions can be made into yarns that can be knitted or woven together to form nets or other textiles and is useful to kill insects.

Present invention also provides better solutions for the release of two or more active ingredients and improved insecticidal textile products can be composed and the two or more active ingredients can be released at approximately fixed ratios by using different concentrations and types of polymer waxes and oils.

In the case of multiple active ingredients, each yarn comprises its specific active ingredient and its specific release composition, which is prepared in such as way that the active ingredient is control released according to its chemical characteristics and is approximately releasing at equal speed and ratio compared to the second active ingredient, biocide or synergist.

Accordingly, a first aspect of the invention relates to a textile product comprising a polymer composition, wherein the polymer composition comprises:
(a): a PolyEthylene matrix; or
(b): a PolyPropylene matrix; or
(c): a matrix comprising a mixture of PolyEthylene and PolyPropylene; and
wherein the matrix is present in an amount from 80 % to 99.95% w/w of the polymer composition;
and
an effective amount of at least one active ingredient selected from the group consisting of:
insecticide, acaricide, biocide, synergist, repellant, herbicide, bactericide and bacteriostatic; and
characterized by that the composition comprises a polymer oil and/or a polymer wax and the oil and/or wax are selected so:
(i): that the effective amount of the active ingredient has a solubility of at least 5 gram/kg (preferably at least 10 gram/kg) in the suitable oil and/or wax, wherein the solubility is measured at a temperature of 10°C above the melting point of the wax or oil at ambient pressure; and
(ii): the oil and/or wax are also miscible in the matrix; and
wherein the wax or oil is present in an amount from 0.05% to 5% w/w of the polymer composition; and
wherein the effective amount of at least one active ingredient is solubilized in the polymer oil and/or a polymer wax, and
wherein the effective amount of the active ingredient is from 0.001 % to 5% dry w/w of the polymer composition.

To measure the solubility of the active ingredient in the suitable oil and/or wax [point (i) of first aspect] is standard routine work for the skilled person. As known to the skilled person the solubility is measured at a temperature above the melting point of the wax or oil. As known to the skilled person, the oil is by definition melted at room temperature, whereas the wax can have a melting point between 30°C and 150°C, typically between 80°C and 120°C.

The term "miscible" of point (ii) of the first aspect shall be understood as the skilled person would understand it in the present context - i.e. the oil and/or wax are miscible with the matrix since the whole concept of the present invention relies in that in the oil and/or wax goes into the matrix and thereby includes the active ingredient into the matrix.

An essential element of the present invention is of course to use the suitable oil and/or wax for the control of the release of active ingredients in a polymer composition.

Accordingly, a second aspect of the invention relates to use of a polymer oil and/or a polymer wax of first aspect for the control of the release of active ingredients in a polymer composition of first aspect and related embodiments herein.

A third aspect of the invention relates to a method for manufacturing a polymer composition, wherein the polymer composition comprises:
(a): a PolyEthylene matrix; or
(b): a PolyPropylene matrix; or
(c): a matrix comprising a mixture of PolyEthylene and PolyPropylene; and
wherein the matrix is present in an amount from 80 % to 99.95% w/w of the polymer composition;
and
an effective amount of at least one active ingredient selected from the group consisting of:
insecticide, acaricide, biocide, synergist, repellant, herbicide, bactericide and bacteriostatic; and
characterized by that the composition comprises a polymer oil and/or a polymer wax and the oil and/or wax are selected so:
(i): that the effective amount of the active ingredient has a solubility of at least 5 gram/kg in the suitable oil and/or wax, wherein the solubility is measured at a temperature of 10°C above the melting point of the wax or oil at ambient pressure; and
(ii): the oil and/or wax are also miscible in the matrix; and
wherein the wax or oil is present in an amount from 0.05% to 5% w/w of the polymer composition; and
wherein the effective amount of at least one active ingredient is solubilized in the polymer oil and/or a polymer wax;
and wherein the method is comprising the following steps:
i) solubilizing the effective active ingredient into a liquid form (e.g. after heating) of the polymer oil and/or a polymer wax of first aspect to get at least 5 gram/kg of the active ingredient (preferably at least 10 gram/kg) dissolved in the liquid oil and/or wax;
ii) heating the PolyEthylene and/or PolyPropylene matrix of first aspect to get a liquid form of the matrix and then mixing the mixture of step i) into the liquid matrix; and
iii) cooling of the mixture of step ii) to get the polymer composition.

Preferably, the polymer composition obtained in step (iii) of the method of the third aspect is a polymer composition of the first aspect or any related embodiments thereof.

As discussed herein, the herein described polymer composition advantageously may be used to make a textile product.

Accordingly, a fourth aspect of the invention relates to a method for manufacturing a textile product comprising first make the polymer composition of first aspect and related embodiments herein according to the method of the third aspect and then make the following subsequent steps:
iv): extruding the polymer composition to get a laminate or yarns; and
v): making the textile product from the laminate or yarns of step iv).

All the method steps as such of the method for manufacturing of third and fourth aspect are as such standard steps known the art.

A fifth aspect of the invention relates to a textile product obtainable by the method for manufacturing a textile product of the fourth aspect.

As know to the skilled person, methods of manufacturing compositions as disclosed herein may for instance be performed as e.g. HDPE is combined with a small amount of LDPE and either PE wax or oil. A metallic salt like Zn stearate may be used for migration inhibition and balanced with the PE wax or oil to provide the required release rate.

As known to the skilled person, the temperature of extruding step iv) of fourth aspect is dependent on the type of active ingredient. For instance when deltamethrin is the active ingredient the target extruding temperature is preferably not higher than 210°C. When permethrin, is the active ingredient the target extruding temperature can be higher than for deltamethrin.

As known to the skilled person, textile products made from the herein described polymer compositions comprising active ingredients can be manufacturing and cut and shaped into yarns, filaments, pellets granulates or yarns made into and cut into textile products, cloths, films, sheets and tarpaulins for e.g. killing insects and thereby useful to protect humans against nuisance insects and insects transmitting diseases such as described herein the malaria protozoa.

Based on the detailed instruction herein, the skilled person can identify the suitable mixtures of waxes and oils of chosen polyethylene and polypropylenes and determine the optimal release rates, required strengths and storage stability as the present invention describes.

Based on the detailed instructions/descriptions herein it is routine work for the skilled person to control the active ingredients release rate of the yarns to get a release rate that is not significantly different for the different relevant active ingredients of interest.

The availability of the herein described new yarns will give the manufacturers of insecticidal treated bednets an enormous flexibility to compose a new improved textile, where one active ingredient is an active ingredient such as an insecticide, but the other can be e.g. a bacteriostatic. Such combinations can especially be interesting for tropical hospitals for beddings, and for uniforms.

By this invention, many different textile products are now possible to manufacture and the products will have approximately equal life time and efficacy. Many different combinations are possible depending on the chosen target for the product.

### DEFINITIONS

Prior to a discussion of the detailed embodiments of the invention is provided a definition of specific terms related to the main aspects of the invention.

Generally, all the definitions of the relevant terms herein should be understood as the skilled person would understand them in the present technical context.

The term "matrix" of first aspect is a well known a widely used term in the present context. As the known to the skilled person it relates to the main part of the polymer composition and thereby also in a textile product made from the polymer matrix. As known to the skilled person and as described herein the matrix may preferably comprise HDPE or e.g. be a mixture of HDPE and LDPE.

The term "solubility" of first aspect is understood herein as the amount of active ingredient (e.g. insecticide) solubilized in the suitable polymer oils (such as e.g. polyethylene oil) and/or wax. An oil is by definition fluid at room temperature (25°C) and a wax is by definition not. The wax may melt at 100-120°C, but others at much lower or higher temperatures. This is known by the skilled person and in the art there are suitable polymer waxes that have a melting temperature between 30°C and 150°C, while others between 80 and 120°C.

In general, understood herein the term "solubility" describes the suitable amount of the active ingredient that can be dissolved in the wax or oil at a temperature and at ambient pressure where the oil or wax is fully melted.

### DRAWINGS

Figure 1: Influence of the polymer composition on release of active ingredient without polyethylene wax.
Figure 2: Influence of the polymer composition on release of active ingredient with polyethylene wax.

Embodiments of the present invention are described below, by way of examples only.

### DETAILED DESCRIPTION OF THE INVENTION

### A polymer composition

Polyethylene has been known for many years and the skilled person knows the different compositions to mix such as a HDPE, LDPE, LLDPE and MDPE. These are standard provided in the industry.

In a preferred embodiment, the oil and/or wax is a polyethylene oil and/or wax and/or the oil and/or wax is a polypropylene oil and/or wax or mixtures thereof.

In a preferred embodiment, the matrix comprises at least 60% of High-Density PolyEthylene (HDPE) or at least 80% of High-Density PolyEthylene (HDPE).

A discussed above, the PolyEthylene matrix generally comprises a relevant amount of HDPE in order to balance the release of the active ingredient and the strength (e.g. bursting strength) of a textile product made from the polymer composition.

An advantage of using same type of polymer oil/wax as the type of the polymer of the matrix (e.g. using a polyethylene wax in a PolyEthylene matrix) may be seen in that one may ensure a good miscibility of the oil/wax in the matrix.

Accordingly, in a preferred embodiment the matrix comprises PolyEthylene [e.g. at least 60% of High-Density PolyEthylene (HDPE)] and the oil and/or wax is a polyethylene oil and/or wax.

As another option, the matrix may comprise at least 70% of PolyPropylene.

When the matrix comprises relevant amount of PolyPropylene it may be preferred that the oil and/or wax is a polypropylene oil and/or wax.

Accordingly in a preferred embodiment, the oil and/or wax is a polyethylene oil and/or wax and/or the oil and/or wax is a polypropylene oil and/or wax or mixtures thereof.

In a preferred embodiment, the wax or oil is present in an amount from 0.1 % to 1% w/w of the polymer composition - sample 3 of the working examples herein in an example of a polymer composition comprising such an amount of wax.

In the present context it may be preferred to use wax over oil as done in sample 3 of the working examples herein.

Without being limited to theory, it is believed that the longer polymer chains of a wax as compared to oil may make the wax more miscible (compatible) with e.g. the commercially very used HDPE matrix and thereby - as discussed herein - properly control the release of the active ingredient by e.g. preventing blooming.

Accordingly, in a preferred embodiment the polymer composition comprises wax - i.e. the wax is present in an amount from 0.05% to 5% w/w of the polymer composition.

In a preferred embodiment, the matrix comprises from 1 to 20% of Low-Density PolyEthylene (LDPE), LLDPE (Linear Low-Density PolyEthylene), or Medium-Density PolyEthylene (MDPE) or a mixture of these.

In a preferred embodiment, polymer composition is a polymer composition, wherein
the matrix comprises at least 85% of High-Density PolyEthylene (HDPE) and from 3 to 7% of Low-Density PolyEthylene (LDPE); and
wherein the wax is present in an amount from 0.5% to 1.5% w/w of the polymer composition; and
wherein the effective amount of deltamethrin is from 0.1 % to 1 % dry w/w of the polymer composition.

Sample 3 of the working examples herein is an example of such a polymer composition.

### Suitable oil/wax polymers

Suitable polyethylene oils and polyethylene waxes may be selected from polyethylene oils and waxes of short chain polymers. Present inventor experimented with both low density and high density oils and waxes. Suitable polyethylene oils and polyethylene waxes may be selected from short chain polyethylene polymers such as listed in table 1 below and the chosen suitable oils and waxes are soluble in the suitable chosen active ingredient and also soluble in the chosen suitable polyethylene HPDE as further exemplified in herein described examples.

An example is high density waxes such as known commercial products Luwax ® granules and Luwax A powder produced by BASF. These homopolymer waxes have multiple uses such as; forms finely divided pastes hereby makes them useful for mould release agents, good lubricating and separating effects - thus a processing aid for natural and synthetic rubber, improve dispersibility and many other characteristics but it is not known for using it as an agent to control the release of insecticides and biocides as present invention describes herein.

Polyethylene oils and waxes (also named low or high density homopolymer polyethylene waxes (see for example luwax1149 from the company BASF) in the art as can be characterized in many different ways. Melting point of high density waxes are typically in the range from 101 °C to 109 °C, with viscosity (120°C) of 950 to 1550 mm² /s . The skilled person can take known method to measure melting point (ASTM D-3418) and in case of viscosity (ASTM D-2162). Molar mass is also a good indication and may be 7000 g/ml. These commercially available waxes are available in granules or powders.

As described herein, a product such as Luwax A is used to dissolve the insecticide and this solution is further mixed into the HDPE polymer. Hereby, the released release effects are obtained as explained in details in the examples and summary of invention herein.

With this knowledge, it now possible to find select suitable polyethylene oils and/waxes, solubilize these into the chosen active ingredient and also solubilize this mix into the HDPE.

Other known polyethylene oil and polyethylene waxes presented in the table 1 below, which may be chosen to solubilize with suitable active ingredients and are examples of polyethylene oils and waxes.

**Table 1. Polyethylene oils and waxes as listed in table 1 may be chosen to solubilize suitable active ingredients.**

| Tradename | Melting point | Melt viscosity | Molar mass | Density |
|---|---|---|---|---|
| | °C | (120 °F) | g/mol | at 23 °C |
| Luwax A | 101 - 109 | 950 - 1550 | approx. 7000 | 0.910 - 0.930 |
| Luwax AH 3 | 110 - 118 | 135 - 240 | approx. 3500 | 0.940 - 0.955 |
| Luwax AH 6 | 108 - 116 | 950 - 1550 | approx. 7000 | 0.930 - 0.950 |
| Luwax AL 3 | 102 - 108 | 135 - 240 | approx. 3500 | 0.910 - 0.925 |
| Luwax AL 61 | 107 - 113 | 950 - 1550 | approx. 7000 | 0.920 - 0.940 |
| Luwax AM 3 | 104 - 108 | 150 - 220 | approx. 3500 | 0.910 - 0.925 |
| Luwax AM 6 | 104 - 109 | 1000 - 1400 | approx. 7000 | 0.910 - 0.930 |

Another list may be; Micronized Polyethylene Wax, Oxidized Polyethylene Wax, Montanic Acid Wax/Montanic Ester Wax, Ethylene Copolymer Wax, and Polyether Wax.

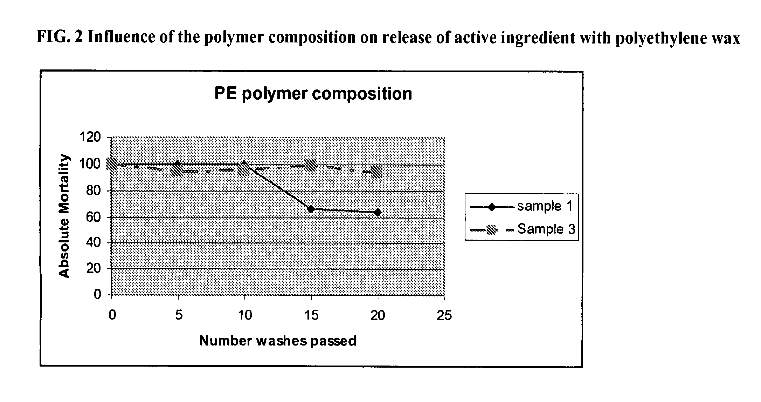

Example 3 demonstrates use of such oils and waxes for the release of insecticide. Figure 2 shows results and the control of release of active ingredient, such as deltamethrin.

Mineral paraffin oils and waxes can be also be used with suitable active ingredient and these are soluble in HDPE matrix, thus is a possible choice for such oils and waxes other than polyethylene and polypropylene oils and waxes or mixtures of these.

The polymer composition influences the migration rate of an additive in two ways: first by influencing the solubility of the additive and second by influencing the glass point of the total compound. Co-polymers may be used to obtain a proper matrix, but for yarns, one polymer will typically be dominant.

Generally, the two polymers are from the same type, but with different chain lengths and branching to obtain different density and crystalline structure and thus different glass points. It is the difference between the actual temperature and the glass point that determines the driving force of the migration to the surface.

Polyethylene oils and waxes as described herein are totally miscible with HDPE and results in a decrease of the crystallization degree and hereby a decrease of the glass transition point of HDPE. Other oils and waxes are oxidized PE waxes, oils and waxes of PP and paraffinic or oxidized paraffinic waxes.

The glass transition temperature of polyethylene of HDPE is -110 °C to - 120 °C and the polymer is totally melted at 90°C to 130 °C. In between the temperature zones, there are crystals and amorphous zones. It is in these amorphous zones that active ingredients and other non polyethylene compatible compounds such as C81 are migrating to the surface, its speed of migration depending on the outside temperature. For polyethylene at room temperature, the composition is thus 140°C over the glass temperature and as present invention implies, due the addition of polyethylene oils and/waxes, the glass temperature may even be lower.

In the case of polyester (PET), the glass temperature is + 70 °C and thus it is not very likely that any migration can occur at room temperature as the polyester composition may be totally in crystal phase.

### Suitable active ingredient

As discussed above, the polymer composition and thereby a textile product made from this comprises an effective amount of at least one active ingredient selected from the group consisting of: insecticide, acaricide, biocide, synergist, repellant, herbicide, bactericide and bacteriostatic.

In a preferred embodiment, the active ingredient is an insecticide and the insecticide is selected from the group consisting of pyrethroids, organophosphates and carbamates.

When the active ingredient is an insecticide, the effective amount of the insecticide is preferably from 0.001 % to 5% dry w/w of the polymer composition.

Deltamethrin is commercially widely used - accordingly, in a preferred embodiment the insecticide is deltamethrin.

Below are further described suitable active ingredients.

Suitable active ingredients are selected but not limited to from the group of pyrethroids, organophosphates and carbamates and pyrrols. The skilled person can selected suitable active ingredients from the list provided below.

Ideally, one active ingredient or repellent has some repellent or contact-irritancy effect or a fast knock down effect, thus to provide personal protection (in practice this is generally pyrethroids, carbamates and repellents). The other active ingredient can be insecticide, an insect repellent or a bacteriostatic.

As examples of the first, one insecticide is a pyrethroid like deltamethrin and the other is pirimiphos methyl, where the insecticide resistance mechanism is Kdr.

In another example, the first insecticide is a pyrethroid and the bacteriostatic is a silver salt. In another example, the first insecticide is a pyrethroid and the second is a pyrrol like chlorfenapyr.

In a third example, the first insecticide is permethrin and the second biocide is a synergist like piperonyl butoxide.

Also, it can just be 1 insecticide or biocide all depending on the product and application.

The insecticide works by contact, not only by oral ingestion. It may work as a fast paralyzing insecticide or as a slow acting killing insecticide or as sterilizing agent. The insecticide may possess repellent or deterrent activity and this may be the main principle. It must have low mammalian toxicity. Suitable insecticides are known by persons skilled in the art. They may be the active ingredients listed below, or belong to the same or other groups. Especially, some insecticides and repellents are used as synergistic or at synergistic dosages and can be used in blends.

Preferred insecticides may belong to the group pyrethroid compounds such as ethofenprox: 2-(4-ethoxyphenyl)-2-methylpropyl-3-phenoxybenzyl ether; Fenvalerate: (RS)-alpha-cyano-3-phenoxybenzyl (RS)-2-(4-chlorophenyl)-3 methylbutyrate; Esfenvalerate:(S)-alpha-cyano-3-phenoxybenzyl (S)-2-(4-chlorophenyl)-3-methylbutyrate; Fenpropathrin: (RS)-alpha-cyano-3-phenoxybenzyl 2,2,3,3-tetramethylcyclopropanecarboxylate; Cypermethrin: (RS)-alpha-cyano-3-phenoxybenzyl (1RS)-cis, trans-3-(2,2-dichlorovinyl)-2,2- dimethylcyclopropanecarboxylate; Permethrin: 3-phenoxybenzyl (1RS)-cis,trans-3-(2,2-dichlorovinyl)-2,2- dimethylcyclopropanecarboxylate; Cyhalothrin: (RS)-alpha-cyano-3-phenoxybenzyl (Z)-(1RS)-cis-3- (2-chloro-3,3,3-trifluoroprop-1-enyl)-2,2-dimethylcyclopro panecarboxylate; Deltamethrin: (S)-alpha-cyano-3-phenoxybenzyl (1R)-cis-3-(2,2-dibromovinyl) -2,2-dimethylcyclopropanecarboxylate; Cyclo-prothrin: (RS)-alpha-cyano-3-phenoxybenzyl (RS)-2,2-dichloro -1-(4-ethoxyphenyl)-cyclopropanecarboxylate; Fluvalinate (alpha-cyano-3-phenoxybenzyl N-(2-chloro-alpha,alpha,alpha-trifluoro-p-tolyl) -D-valinate); Bifenthrin: (2-methy)biphenyl-3-ylmethyl)0(Z)-(1RS)-cis-3-(2-chloro-3,3,3-trifluoro-1-propenyl) -2,2-dimethylcyclopropanecarboxylate; 2-methyl-2-(4-bromodifluoromethoxyphenyl) propyl (3-phenoxybenzyl) ether; Tralomethrin: (S)-alpha-cyano-3-phenoxybenzyl (1R-cis)3((1'RS)(1',2',2',2'-tetrabromoethyl))-2,2-dimethylcyclopropanecarboxylate; Silafluofen: 4-ethoxyphenyl (3-(4-fluoro-3-phenoxyphenyl)propyl}dimethylsilane; D-fenothrin: 3-phenoxybenzyl (1R)-cis, trans)-chrysanthemate; Cyphenothrin: (RS)-alpha-cyano-3-phenoxybenzyl (1R-cis, trans)-chrysanthemate, D-resmethrin: 5-benzyl-3-furylmethyl (1R-cis, trans)-chrysanthemate; Acri-nathrin: (S)-alpha-cyano-3-phenoxybenzyl (1R-cis(Z))-(2,2-dimethyl-3- (oxo-3-(1,1,1,3,3,3-hexafluoropropyloxy)propenyl (cyclopropanecarboxylate; Cyfluthrin: (RS)-alpha-cyano-4-fluoro-3-phenoxybenzyl 3-(2,2-dichlorovinyl)-2,2-dimethylcyclopropanecarboxylate; Tefluthrin: 2,3,5,6-tetrafluoro-4-methylbenzyl (1RS-cis (Z))-3-(2-chloro-3,3,3-trifluoroprop-1-enyl)-2,2-dimethylcyclopropanecarbo xylate; Transfluthrin: 2,3,5,6-tetrafluorobenzyl (1R-trans)-3-(2,2-dichlorovinyl) -2,2-dimethylcyclopropane-carboxylate; Tetramethrin: 3,4,5,6-tetrahydrophthalimido-methyl (1RS)-cis, trans-chrysanthemate; Allethrin: (RS)-3-allyl-2-methyl-4-oxocyclopent-2-enyl (1RS)-cis, trans-chrysanthemate; Prallethrin: (S)-2-methyl-4-oxo-3-(2-propynyl)cyclopent-2-enyl (1R)-cis, trans-chrysanthemate; Empenthrin: (RS)-1-ethynyl-2-methyl-2-pentenyl (1R)-cis,trans-chrysanthemate; Imiprothrin: 2,5-dioxo-3-(prop-2-ynyl)imidazolidin-1-ylmethyl (1R)-cis; trans-2,2-dimethyl-3-(2-methyl-1-propenyl)-cyclopropanecarboxylate; D-flamethrin: 5-(2-propynyl)-furfuryl (1R)-cis, trans-chrysanthemate, or 5-(2-propynyl)furfuryl 2,2,3,3-tetramethylcyclopropane-carboxylate.

Therefore, in a preferred embodiment, one filament can comprise a pyrethroid (such as e.g. deltamethrin, permethrin or bifenthrin), and the other filament a piperonyl butoxide. These can be incorporated into filaments and thereafter spun into yarns.

Insects are capable of developing resistance, and mosquitoes and other biting insects have already been observed to develop resistance to pyrethroids. In such cases, it may be advantageous to replace the pyrethroid with another insecticide with a low mammalian toxicity or to impregnate a part of the material net with a pyrethroid and a part of it with another insecticide. Such a combination may also be used in general as a strategy to delay resistance development. Care should be taken to combine insecticides that have little or no chance to develop cross resistance, e.g. where the development of resistance to one of them also confer resistance to the other even the two insecticides are of different type. Such alternative or supplemental insecticides may be compounds such as organophosphorous compounds organo-phosphorous compounds such as: Fenitrothion: O,O-dimethyl 0-(4-nitro-m-tolyl) phosphorothioate; Diazinon: 0,0-diethyl-0-(2-isopropyl-6-methyl-4-pyrimidinyl) phosphorothioate; Pyridaphenthion: 0-(1,6-dihydro-6-oxo-1-phenylpyrazidin-3-yl) 0,0-diethyl phosphorothioate,; Pirimiphos-Etyl: 0,0-diethyl 0-(2-(diethylamino) 6-methyl-pyrimidinyl) phosphorothioate; PirimiphosMethyl: 0-[2-(diethylamino)-6-methyl-4pyrimidinyl] 0,0-dimethyl phosphorothioate; Etrimphos: 0-6-ethoxy-2-ethyl-pyrimidin-4-yl-0,0-dimethyl-phosphorothioate, Fenthion: 0,0-dimethyl-0-[-3-methyl-4-(methylthio) phenyl phosphorothioate, Phoxim: 2-(diethoxyphosphinothoyloxyimino)-2-phenylacetonitrile; Chlorpyrifos: 0,0-diethyl-0-(3,5,6-trichloro-2-pyrinyl) phosphorothioate; Chlorpyriphos-methyl: 0,0-dimethyl 0-(3,5,6-trichloro-2-pyridinyl) phosphorothioate; Cyano-phos: 0,0-dimethyl 0-(4cyanophenyl) phosphorothioate; Pyraclofos: (R,S)[4-chlorophenyl)-pyrazol-4-yl] -0-ethyl-S-n-propyl phosphorothioate; Acephate: 0,S-dimethyl acetylphospho-roamidothioate; Azamethiphos: S-(6-chloro-2,3-dihydro-oxo-1,3-oxazolo [4,5-b] pyridin-3-ylmethyl phosphorothioate; Malathion: 0,0-dimethyl phosphorodithioate ester of diethyl mercaptosuccinate; Temephos: (0,0'(thiodi-4-1-phenylene) 0,0,0,0-tetramethyl phosphorodithioate, Dimethoate: ((0,0-dimethyl S-(n-methylcarbamoylmethyl) phosphorodithioate, Formothion: S[2-formylmethylamino]-2-oxoethyl]-O,O-dimethyl phosphorodithioate; Phenthoate: 0,0-dimethyl S-(alpha-ethoxycarbonylbenzyl)-phosphorodithioate.

Furthermore, carbamate compounds may be applied including compounds such as: Alanycarb: S-methyl-N[[N-methyl-N-[N-benzyl-N(2-ethoxy-carbonylethyl) amino-thio]carbamoyl]thioacetimidate; Bendiocarb: 2,2-dimethyl-1,3-benzodioxol-4yl- methylcarba-mate); Carbaryl (1-naphthyl N-methylcarbamate); Isoprocarb: 2-(1-methylethyl) phenyl methylcarbamate; Carbosulfan: 2,3 dihydro-2,2-dimethyl-7-benzofuranyl [(dibutylamino)thio] methylcarbamate; Fenoxycarb: Ethyl[2-(4-phenoxyphenoxy)ethyl] carbamate; Indoxacarb: Methyl-7-chloro-2,3,4a,5-tetrahydro-2-[methoxycarbonyl (-4-trifluoromethoxyphenyl)]; Propoxur: 2-isopropyloxyphenol methylcarbamate; Pirimicarb: 2-dimethylamino-5,6-dimethyl-4-pyrimidinyl- dimethylcarbamate; Thidiocarb: Dimethyl N,N'(thiobis((methylimino)carbonoyloxy) bisethanimidiothioate); Methomyl: S-methyl N-((methylcarbamoyl)oxy)thioacetamidate; Ethiofencarb: 2-((ethylthio)methyl)phenyl methylcarbamate; Fenothiocarb: S-(4-phenoxybutyl)-N,N-dimethyl thiocarbamate; Cartap: S,S'-(2-5dimethylamino)trimethylene)bis (thiocarbamate)hydrochloride; Fenobucarb: 2-sec-butylphenylmethyl carbamate; XMC: 3,5-dimethylphenyl-methyl carbamate; Xylylcarb: 3,4-dimethylphenylmethylcarbamate.

Newer insecticides with lower mammalian toxicity at use dosage are interesting alternatives, especially because vector insects rarely have developed resistance to these. Such new groups of insecticides are pyramidialmines (Pyrimidifen), Pyrazoles (Fipronil and Fenpyrox-iamte), Pyrrols (clorfenapyr), dicloproamid. Chlorphenapyr is especially interesting since it has been used experimentally (Rowland et al, 2005) and shown interesting, though slow effect.

Where nets and other impregnated materials are used in mass campaigns, the alternative or supplemental insecticide may also be an insecticide with a sterilizing effect thus to sterilize the mosquitoes and avoid the next generation of mosquitoes. Such insecticides can be of the benzoyl urea group such as 1-(alfa-4-(chloro-alpha-cyclopropylbenzylidenamino-oxy)-p-tolyl)-3-(2,6-diflourobenzoyl)urea, Diflubenzuron: N-(((3,5-dichloro-4-(1,1,2,2-tetraflouroethoxy)phenylamino) carbonyl)2,6 diflouro benzamid, Triflumuron: 2-Chloro-N-(((4-(triflouromethoxy) phenyl)-amino-)carbonyl) benzamide, or a triazin such as N-cyclopropyl-1,3,5 -triazine-2,4,6-triamin or other insecticides with a sterilizing effect on adult mosquitoes.

Another way to overcome resistance problems is the traditional use of synergists. Piperonyl butoxid and sesamex are traditionally used to combine with pyrethroids to overcome enzymatic based resistance mechanisms. Further DEET, usually used as a repellent, has shown to have synergistic abilities to organophosphorous and Carbamates, but is difficult to integrate for a prolonged effect due to its high vapor pressure (Vincent et al, 2004). Other biocides may show synergistic effect due to their interaction with detoxifying resistance mechanisms. Integrating of such biocides that maybe are registered as insecticides may be included, provided they are not innate unstable or with high vapor pressure.

The repellent may work in a mixture with the insecticide or acaricide or by its own abilities. Repellent are selected from DEET: N,N-Diethyl-meta-toluamid; DEPA (N,N-diethylphenylacetamid; 1-(3-cyclohexan-1-yl-carbonyl)-2-methylpiperine; (2-hydroxymethylcyclohexyl); acetic acid lactone; 2-ethyl-1,3-hexandiol; indalone; MDNA: Methyl-neodecanamide; and pyrethroids not used as insecticides such as Esbiothrin: {(+/-)-3-ally62-methyl-4-oxocyclopent-2(+)-trans-chrysanthemate.

Pyrethroids and some repellants have chiral centers giving rise to two to several racemates or isomers. The list above also includes existing and chiral derived isomers, racemates and pure enantiomer or diasteomers produced to give enhanced effect or to reduce the insecticidal or mammalian toxicity while increasing a specific activity as durability, repellent or deterrent effect or narrowing the activity to a special groups of target insects or acarinae.)

Herbicides, especially algacides, and bacteriocides or bacteriostatics may be integrated to prevent growth of algae and bacteria on the final product. A person skilled in the art can select among these from criteria of thermal stability, solubility in oil, low mammalian toxicity and low vapor pressure. Negative, chemical interactions between active ingredients should be avoided.

The active ingredients in form of insecticide, acaricide, biocide, repellant, herbicide, bactericide or bacteriostatic mentioned in the present invention may be included in technical grade in a master batch in powder, granular or fluid form or added to the basic synthetic material just after it's polymerization. These intermediate forms are also included in the present invention. The active ingredients may also be added undiluted or diluted with inert material directly to the final process step when forming the yarn fibre or film. When more than one insecticide, acaricide, biocide, repellant, herbicide, bactericide or bacteriostatic are added, they may be added during various step of the production process. Some active ingredients are very temperature stable and can be added just after polymerization of the synthetic, whereas other active ingredients can only by added later in the production process to avoid evaporation or destruction. Such addition may be in the latest stage of the extrusion or post extrusion in the form of a coating. Modern extruders can be combined so that the same spinerette is fed by two extruders each carrying a different insecticide and produce different filaments yarns thereby carry different insecticides before the yarn is formed e.g. by twisting. Several ingredients may be added mixed or in separate master batches before mixing into the final mass for production, often as extrusion. Additives to protect the active ingredients against destruction in the intermediary or final production process can of course with advantage already be mixed into these intermediary forms as a master batch.

A typical amount of active ingredients is between 0.001 and 5% (dry weight) of the (dry) weight of the fabric or netting dependent on the insecticidal efficacy of the insecticide. A preferred amount is between 0.05 and 1 % of the fabric or netting dependent on the insecticide. As understood by the skilled person in the present context - this may alternatively be expressed as that the effective amount of the active ingredient is preferably from 0.001 % to 5% dry w/w of the polymer composition.

For a pyrethroid like deltamethrin or alpha-cypermethrin, the preferred amounts are between 0.05 and 0.5 % of the weight of fabric or netting. For a pyrethroid like permethrin or etofenprox or an insecticide like chlorfenapyr, the preferred amounts are between 0.1 and 6 %.

When the synthetic filament fibre or yarn are mixed with non impregnated yarns or filaments of synthetic or natural origin, the concentrations may be higher to obtain a proper level of insecticide or biocide at contact points for the target insect or acarinae. When the active ingredients are mixed into intermediary phases like a masterbatch, the concentration is typically 10-100 times higher than in the final product.

The term "Masterbatch" is denoted herein as a concentrated pre-mixture of one or more additives in a polymer (wax or thermoplastic) compatible with the matrix polymer and often with a lower melting point and higher melt index for proper distribution.

### Solubility of the active ingredient

Short chained polymers typically of the same type as the matrix polymer or at least compatible and soluble in the basic polymer. The term "basic" is understood as for example in case of a polyethylene yarn, the basic polymer is HDPE.

Examples are waxes and oils of polyethylene and polypropylene and paraffinic waxes and oxidized versions of these. The active ingredient solubility in the short chained polymer can be measured directly by melting the two and mixing.

It is clearly understood by the skilled person that a most effective amount and a low as possible active ingredient amount is chosen sufficient to kill the target insects or in case of the target is bacteria, biocides. Such dosages are depending on the material and it is the surface concentration that must be regulated. A typical dosage for a 0,10 to a 0,20 mm monofilament yarn is 1-6 g Deltamethrin/kg yarn or 1-9 g alpha-cypermethrin/kg yarn or 10-60 g etofenprox or permethrin/kg yarn.

The basic requirement is that the chosen suitable active ingredient is soluble in the chosen suitable polyethylene oil and/or wax or polypropylene oil and/waxes and mixtures thereof.

This can be seen as a homogenous solution when the insecticide and the polyethylene oil and/or wax are mixed together in suitable concentrations, e.g. 5-40 % of the insecticide or biocide in the wax or oil.

### Method of manufacturing

As discussed above, the third aspect of the invention relates to a method for manufacturing the polymer composition and the fourth aspect of the invention relates to a method for manufacturing a textile product.

The individual steps of the method for manufacturing are discussed below.

The insecticide or biocide is premixed into a masterbatch of a polymer or wax compatible with the matrix dominating polymer, e.g. HDPE or PP. Other additives may be added into the same masterbatch or into a separate masterbatch. High dosage insecticides as Permethrin, etofenprox or chlorfenapyr may also be added directly to the extruder without premixing. In that case, it can with advantage be injected into an injection point close to the extruder head, provided the extruder has a proper mixing after the injection point. Otherwise, the masterbatch is mixed into the basic polymer in a suitable mixing unit, and from there poured or sucked into the extruder. Extruder temperature depends on the polymer matrix; in general, it must not be higher than the most temperature sensitive additive, often the insecticide or biocide. Following extrusion, the laminate or yarn is cooled in air or a water bath and stretching will b applied to yarns to obtain a higher tension strength and proper diameter.

### Different yarn types and different filament types

Multiple active ingredients in yarns is another option a skilled person can chose and use present invention. Again suitable polyethylene oils and waxes and polypropylene oils and waxes and all possible mixtures thereof can be identified using suitable active ingredients which are soluble in the chosen oils and waxes and also soluble in HDPE matrix.

Thus, the skilled person can for example use two different yarns with each its different insecticide, the different yarn types can be used to construct the bednets with improved release profiles, stores better and with suitable yarn strength and each insecticide can be release at the time ratio and available on the surface to kill insects.

As discussed above, the term "two different yarn types" is defined herein as the first yarn type is different from the second yarn type as such in their composition without the presence of the relevant active ingredients. As understood by the skilled person based on the present description - the individual yarn types will differ with respect to e.g. relevant polymers, additives and components that are used to control the release rate of the active ingredients as described herein. As discussed above, the term "different filament types" are defined in a similar way. As discussed above, based on the detailed instructions/descriptions herein it is routine work for the skilled person to control the active ingredients release rate of the yarns to get a release rate that is significantly different for the different relevant active ingredients of interest. The term "release composition" describes a special developed composition of chemicals including the polymer composition combined in such a way that the chosen different active ingredients are released at roughly the same speed and in roughly the same ratio in the different filaments or yarns. As discussed herein, this guarantees that chosen different active ingredients have equal life time throughout the use of the textile product (e.g. a bednet)

The release compositions comprise different components depending of the function. Below are described different components with specific functions and preferred materials to obtain the preferred release characteristics.

Cloth and especially trousers and socks may be formed from yarns of multifilament polymers that release insecticides that are not skin irritating and very low toxic, such as permethrin and even less toxic, etofenprox, but also active ingredients that are registered as repellents.

### Textile product

An example of relevant is a textile product a film, a net, a sheet, a tarpaulin or a cloth.

Preferably, the textile product is a net comprising an effective amount of insecticide and more preferably wherein the insecticide net is a mosquito net to protect humans against malaria infections transmitted by malaria mosquitoes.

As known to the skilled person, a relevant textile product shall normally have a relevant Tension Strength. As discussed herein, one can get this by using a polymer composition as described herein to make a textile product (i.e. a proper ration of matrix and oil/wax polymers).

Accordingly, the textile product as described herein is preferably a textile product, wherein the textile product has a Tension Strength (Newton) of at least 100 Newton (N) in Warp direction and at least 50 Newton in Weft direction, measured according to ISO 13934-2 standard method for measuring Tension Strength with the minor modification of the ISO 13934-2 method relating to that ISO 13934-2 describes using 2 grabs and 2 hooks, and herein is used 1 grab and 1 hook.

As can be seen below, sample 3 of the working examples herein has a Tension Strength (Newton) of 250 Newton (N) in Warp direction and at least 170 Newton in Weft direction.

As discussed herein, an important advantage of the present invention is that one can control release rate of the active ingredient (e.g. insecticide) and thereby make a textile product which can still release an effective amount of active ingredient after several washes of the product.

Accordingly, in a preferred embodiment the textile product is textile product, which has active ingredient present on the surface of the textile product after 5 defined laboratory washes.

Preferably, textile product has active ingredient present on the surface of the textile product after 15 defined laboratory washes, more preferably after 20 defined laboratory washes.

In relation to this, it is preferred that the textile product (e.g. a net) is comprising an effective amount of insecticide and wherein the textile product (e.g. net) has insecticide present on the surface of the net after 15 defined laboratory washes.

When the textile product is a net and the active ingredient is an insecticide there is a well established WHO test for determining wash resistance of such an insecticide net - i.e. well established laboratory wash procedures.

In line of this when the textile product is an insecticide net the washes shall be made according to WHO standard wash test guidelines as described in reference 1 herein.

Accordingly, for an insecticide net the term "insecticide present on the surface of the net after 15 defined laboratory washes" may be said to be a standard requirement for releasing a textile product to kill insects on the market according to the WHO guidelines for nets such as e.g. bednets.

As known to the skilled person this wash test is performed to have an indication of the required lifetime [e.g. 3 to 7 years] of the textile product to kill insects.

If the insecticide is an insecticide that can kill mosquitoes the insecticide net shall preferably be able to kill at least 80% of the mosquitoes (measured according to example 1) after the above mentioned washes.

No international guidelines exist for the time being for evaluating impregnated cloths and uniforms and textile product wherein the active ingredient is not an insecticide.

However, without being limited to theory it is believed that skilled person would for any relevant textile product comprising a herein relevant active ingredient (e.g. a biocide) be able to determine similar wash properties - i.e. be able to determine if the textile product is a textile product, which has active ingredient present on the surface of the textile product after 15 defined laboratory washes.

### Insects and acarides

As named herein, the present invention can also be used to make cloth from the yarns with insecticides. The choice of such active ingredients than depends on the.target. The skilled person will chose suitable active ingredients such as an acaricide in case the target is to kill ticks and the skilled artisan may chose other active ingredients for other target insects.

Malaria is described herein as the major target for the protection of humans using the herein described insect textile products in the form of bednets, nets, curtains, tsetse traps, roofing material or tarpaulins.

The major species infective to humans are *Plasmodium falciparum* and *Plasmodium vivax.* There are specific species indigenous to continents and countries. It is understood herein that these are killed by the herein described invention. However, other vector borne diseases like denghue fever, yellow fever, leishmaniasis, filariasis, borellia and other diseases vectored or transported by invertebrates may also be targeted with such insecticide or acaricide treated textiles.

Examples of herein relevant insect species are: Anopheles spp, *gambiae, arabiensis, funestus, culifacies, stephensi, minimus, (dirus), fluviatilis, nivipes, philippinensis, sundaicus, annularis* and *varuna.* Other biting insects where the herein described textile products can be useful to protect humans are biting insects. Generally biting insects such as; biting mosquitoes in the genus *Aedes, Anopheles* and *Culex* and phlebotomes ("sandflies") and more specific Anopheles species such as but not limited to An. gambiae, *An. funestus, An. stephensi* and *An. darlingi* and also *Aedes* genus and species: *albopictus* and *aegypti* and *Culex* species such as *Culex pipiens* and *quinquefasciatus.*

### Strength of the polymer

A suitable example of a filament is a polymer such as a polymer chosen from the group consisting of polyethylene, polypropylene, EVA, polyacrylic, polyphtalates, polyurethane and co-polymers made of these.

More preferably, the basic polymers of the yarn, filament or laminate type comprise mostly of high density polyethylene (HDPE) and linear low-density polyethylene (LLDPE) or low-density polyethylene (LDPE) or one or more of a mixture of two polypropylenes with different melt index.

Further it is understood that the skilled person uses known compounds and products for make compositions suitable for the products to be shaped.

So, may be added anti-migration agents. Migration barrier molecules or pigments are used to reduce the rate of blooming of the active ingredients.. Metallic salts and crystalline accelerating additives can be used for such effect.

More components are migrating accelerating agent and agents that improve insecticide or acaricide active ingredient to the target.

### Release compositions

In release compositions different types of additives can be used.

Additives or components belonging to the group of anti-oxidants can be added. Anti-oxidants include oxygen-radical scavengers, HALS (Hindered Amine Light Stabilizer) and NOR-HALS (Alkyloxamin Hindered Amine Light Stabilizer) molecules. Their role is to prevent destruction of the active ingredients as well as the polymer and UV filters during processing and use, especially during weathering with UV exposure. Nickel quenchers, steric hindered phenols, phosphits, phosphonits, thio-co-stabilizers and HALS molecules are used to prevent the destruction from oxygen or combinations of oxygen, residual catalysts from the polymerization process, UV activated molecules that become electronic donors. This oxygen - radical scavengers increase stabilization of the synthetic polymer during processing as well as during use and also protect the active ingredient(s) and less stable UV filters.

### Hindered Amine Light Stabilizers (additive)

Hindered Amine Light Stabilizers (HALS) are extremely efficient stabilizers against light-induced degradation of most polymers. They do not absorb UV radiation, but act to inhibit degradation of the polymer, thus extending its durability. Significant levels of stabilization are achieved at relatively low concentrations. HALS' high efficiency and longevity are due to a cyclic process wherein the HALS are regenerated rather than consumed during the stabilization process. They also protect polymers from thermal degradation and can be used as thermal stabilizer.

For thermal stabilization of products and especially in combination with active ingredients are used anti-oxidants such as phosphits and phenols. These antioxidants interrupt the degradation process and help to prevent or retard all the undesirable changes.

During an additive life cycle, the additive, as well as its components, is exposed to numerous factors that can contribute to the degradation of the additive. These factors can lead to manufacturing problems and reduced shelf life. Product consistency and reliability are necessary considerations for the manufacture, storage stability and service life of additives, sealants and their raw materials. Additives and its raw materials can undergo degradation, initiated by exposure to high temperatures, prolonged exposure to oxygen, mechanical shear or exposure to light. Any one of these factors can lead to an undesirable change in physical properties of the unstabilized additive. These changes can result in manufacturing problems, poor product appearance or a reduction of additive strength.

In a preferred combination of stabilizers, herein the inventor uses a mix package of stabilizers including steric hindered phenol with a combination of HALS molecules and phosphits, phosphonits and/or thio-co-stabilizers. The active ingredient may also destabilize the HALS molecule and thereby be destroyed itself. Specially stabilized HALS additives that do not interact with the active ingredients e.g. insecticide can be identified from additive producers.

Preferred amount is between 0,001 and 5 %; optimum effect is obtained by adapting the mix package to the process temperature and the concentration of active ingredients and UV filter, with most preferred concentration is 0.6% Irganox B 225. The use of Irganox 225 helps to reduce the losses of deltamethrin during the extrusion process and also helps to reduce the formation of inactive isomers (for deltamethrin formation of inactive not wanted R-isomer).

### UV filters

UV filters that migrate are less suitable, because they influence the migration rate of the insecticide while migrating themselves and thus making the process difficult to stabilize. It is of course important that the absorbing spectrum of the UV filter covers the absorbing spectrum of the active ingredient(s) and/or the synthetic polymer. It is also important that the UV filter does not migrate faster than the insecticide where after the protection effect is lost.

Where several active ingredients are used, several UV filters may be applied. The higher the UV filter concentration, the better the protection. Preferred is a combination of UV filter and anti-oxidant (e.g. a HALS) for longer protection by synergistic effect. Most preferred is to use combinations of UV filters and stabilizers that concentrate near and on the surface where the active ingredient is most exposed to UV degradation. The package of stabilizers must then also have bigger molecules of HALS (oligomer HALS) to provide continuous protection of the synthetic itself. Also preferred are photo-reactive HALS molecules that are activated by UV light and thus provide high protection just below the surface of the material, where they are fixed after migration from deeper layers of the material. However, products made with migrating UV filters cannot last for years in the sun and change migration and physical characteristic due to the migrating filter

Preferred concentrations of UV filters and stabilizers are 0,001 to 10 %, higher in intermediary products as master batches combined with pyrethroids. Various concentrations of Irganox B225 were tested and it was found that 0.6 % is preferred.

With e.g. permethrin as the suitable insecticide, one may probably different concentrations of Irganox B225, because more permethrin per square meter is needed to obtain kill.

An example of another choice may be for example 0.7 % Tinuvin 494 that contains a HALS and 20% zinc stearate in concentrated form, so that would be 0.15 % zinc stearate.

Another example is a UV filter like Tinuvin 765 at 0.3 %.

### EXAMPLES

### Example 1: Method to measure killing or knock down of mosquitoes in vivo with a sufficient insecticide dosage: (according to WHO, World Health Organization).

The term "sufficient dosage" herein is defined by: 50, 3-4 days old female mosquitoes are exposed to textile (net) under standard WHO cones, 5 in each cone, for 3 min. The net must be able to kill at least 80 % of mosquitoes of a susceptible (no insecticide resistance) strain of mosquitoes after 24 hours or to paralyze (called knocked down) at least 95 % within 60 min. Mosquitoes are hold in cups with sugar water available for the 24 hr, at 25±2°C and 75±10 % RH.

Alternatively, 5-8 days old adult female mosquitoes are released in a tunnel (square section 25x25 cm) made of glass, 60 cm length. At each end of the tunnel, a 25 square cm cages is fitted (extension) and covered with polyester netting. At one third of the length, a disposable cardboard frame is placed with the netting sample. The surface of the netting available to mosquitoes is 400 cm² (20x20 cm), with none holes each 1 cm diameter: one hole is located at the centre of the square; the other eight are equidistant and located at 5 cm from the border. In the shorter section of the tunnel, bait (guinea pig for *Anopheles gambiae)* is placed, unable to move. In the cage at the end of the longer section of the tunnel, 100 females are introduced at 18:00. Females are free to fly in the tunnel, but have to make contact with the net and locate holes before passing trough to reach the bait. The following morning 9:00, mosquitoes are removed and counted from each section and immediate mortality and blood feeding status is recorded. Delayed mortality is recorded on live mosquitoes transferred to cups with sugar water and after 24 hr. Mortality must be at least 80 % and blood feeding inhibition at least 90 % for a textile (net) still sufficient active. (Guidelines for laboratory and field testing of long lasting insecticidal mosquito nets, WHO/CDS/WHOPES/GCDPP/2005.11).

### Example 2 - Impact of polyethylene compositions and release of insecticide

Two net samples were made (sample 1 and sample 2), one with HDPE and additives only for short termed migration rate regulation and one with HDPE and low and medium density polyethylene to provide solubility of the insecticide. The two products are thus made with same composition of additives, but different polymer matrix.

In sample 1, the polymer matrix consist of 56 % HDPE and a mix of LDPE, LLDPE and MDPE. In sample 2, only masterbatch contribute to non-HDPE. Masterbatch is a concentrated premix of additives. It is mixed with basic polymer before extrusion.

**Table 1: Polyethylene compositions with deltamethrin comprising C81 and high amounts of LDPE+LLDPE+MDPE and HDPE.**

| Ingredient (g/kg) | Sample 1 | Sample 2 |
|---|---|---|
| Deltamethrin | 1.9 | 1.9 |
| Benzotriazol | 3 | 3 |
| Hydroxy-benzophenon (C81) | 4 | 4 |
| Triazin w Zn-stearate | 7 | 7 |
| Phosphit -Phenol anti-oxidant | 1 | 1 |
| HDPE | 560 | 877 |
| LDPE+LLDPE+MDPE | 420 | 110 |

Bioassays made according to WHO protocol in a WHO reference laboratory as explained in example 1 above. It was seen that the product (sample 2) with high level of HDPE passed below the WHOPES criteria for sufficient activity (80 % Mortality) after just 3 washes, whereas the sample 1 with just 56 % HDPE resisted 11 washes. None of these can thus pass a WHO definition for long lasting nets based on this test and mortality criteria but one is better than the other.

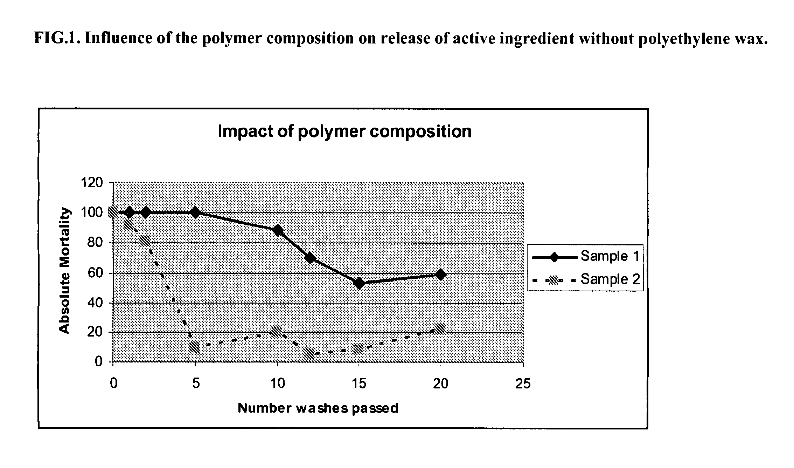

Figure 1 shows the washing off effect and represents a way of demonstrating that the amount of insecticide is uncontrolled and high blooming is observed.

### Conclusion

Compared to Sample 1, Sample 2 is "blooming" more, since little LDPE and no polyethylene wax was added to the compositions (as in Sample 3 below herein), and there is also C81 added which is not present in sample 3). A higher blooming rate results in that deltamethrin (insecticide) is washed off rapidly. Blooming means a migration to the surface because of lack of solubility or low solubility in the polymer.

### Example 3 - Polyethylene composition with right choice of polyethylene oils and waxes and not comprising Hydroxy-benzophenon C81

**Table 3: Polyethylene compositions with insecticide deltamethrin. Note sample 3 has no C81 and comprises polyethylene wax.**

| **Ingredient** | Sample 1 | Sample 3 |
|---|---|---|
| Deltamethrin (insecticide) | 1.9 | 1.9 |
| Triazol | 3 | 3 |
| Hydroxy-benzophenon C81 | 4 | **0** |
| Triazin with Zn-stearate | 7 | 7 |
| Phosphit -Phenol antioxidant | 1 | 4 |
| HDPE | 560 | 949 |
| LDPE+LLDPE+MDPE | 420 | 35 |
| Polyethylene wax | 0 | **3** |

### Conclusion

Sample 1 is the same as in example table 1, sample 3 has no UV filter (C81) and only one masterbatch with none HDPE. No UV filter in the sample 3, and polyethylene wax.

Because of the higher content of HDPE, the yarn is strong and because of the polyethylene wax, the insecticide is well solubilized. Also because of the polyethylene wax the insecticide does not bloom and is not removed during washing (as the UV filter hydroxyl-benzophenon), as a result, insecticidal effect remains constant, indicating that the process of insecticide migration runs to a stable state between surface and yarn matrix.

### Example 4: Physical characteristic of the shaped product - Strength

Strength is measured according to ISO 13934-2, or a modified version known to the skilled person with one hook and one grab and bursting strength according to EN ISO 13938-2.

| Technical test | Sample 1 (5 determinations) | Sample 3 (2 determinations) |
|---|---|---|
| Bursting strength (KPa) | 449 ± 15 | 485 |
| Tension Strength (N) | | |
| Warp | 224 ± 11 | **250** |
| Weft | 146 ± 11 | **170** |

It can be seen that the very high level of HDPE in sample makes the net stronger (sample 3-warp value 250 and weft value 170 compared to lower in sample 1). S3 is stronger since more HDPE than in S1.

### Overall Conclusion

It is concluded that a high level of non HDPE can be replaced with a low level of compatible oil or wax that increase the solubility of the active ingredient in the basic polymer without decreasing the strength as much as the high level of non HDPE did. It is also concluded that this solution gives a more stable release of the active ingredient over time than the use of migration accelerators, especially when these migrate themselves. The process described thus becomes a controlled migration instead of an uncontrollable blooming.

### REFERENCES

1. WHO: guidelines for laboratory and field testing of long lasting insecticidal mosquito nets; WHO/CDS/WHOPES/GCD PP/2005 guidelines.
2. GB1480125
3. US4680328
4. WO00137662
5. WO2007085640
6. W02009/003468

## Claims

1. A textile product comprising a polymer composition, wherein the polymer composition comprises:
(a): a PolyEthylene matrix; or
(b): a PolyPropylene matrix; or
(c): a matrix comprising a mixture of PolyEthylene and PolyPropylene; and
wherein the matrix is present in an amount from 80 % to 99.95% w/w of the polymer composition;
and
an effective amount of at least one active ingredient selected from the group consisting of:
insecticide, acaricide, biocide, synergist, repellant, herbicide, bactericide and bacteriostatic; and
**characterized by** that the composition comprises a polymer oil and/or a polymer wax and the oil and/or wax are selected so:
(i): that the effective amount of the active ingredient has a solubility of at least 5 gram/kg in the suitable oil and/or wax, wherein the solubility is measured at a temperature of 10°C above the melting point of the wax or oil at ambient pressure; and
(ii): the oil and/or wax are also miscible in the matrix; and
wherein the wax or oil is present in an amount from 0.05% to 5% w/w of the polymer composition; and
wherein the effective amount of at least one active ingredient is solubilized in the polymer oil and/or a polymer wax; and
wherein the effective amount of the active ingredient is from 0.001 % to 5% dry w/w of the polymer composition.

2. The textile product of claim 1, wherein the oil and/or wax is a polyethylene oil and/or wax and/or the oil and/or wax is a polypropylene oil and/or wax or mixtures thereof.

3. The textile product of claims 1 or 2, wherein the matrix comprises at least 60% of High-Density PolyEthylene (HDPE).

4. The textile product of claims 3, wherein the oil and/or wax is a polyethylene oil and/or wax.

5. The textile product of any of the preceding claims, wherein the wax is present in an amount from 0.05% to 5% w/w of the polymer composition.

6. The textile product of any of the preceding claims, wherein the active ingredient is an insecticide and the insecticide is selected from the group consisting of pyrethroids, organophosphates and carbamates; and
wherein the effective amount of the insecticide is from 0.001 % to 5% dry w/w of the polymer composition.

7. The textile product of any of the preceding claims, wherein the matrix comprises from 1 to 20% of Low-Density PolyEthylene (LDPE), LLDPE (Linear Low-Density PolyEthylene) or Medium-Density PolyEthylene (MDPE) or a mixture of these.

8. The textile product claims 5 to 7, wherein
the matrix comprises at least 85% of High-Density PolyEthylene (HDPE) and from 3 to 7% of Low-Density PolyEthylene (LDPE); and
wherein the wax is present in an amount from 0.5% to 1.5% w/w of the polymer composition; and
wherein the effective amount of deltamethrin is from 0.1 % to 1 % dry w/w of the polymer composition.

9. Use of a polymer oil and/or a polymer wax of claim 1 for the control of the release of active ingredients in a polymer composition of any the preceding claims.

10. A method for manufacturing a polymer composition, wherein the polymer composition comprises:
(a): a PolyEthylene matrix; or
(b): a PolyPropylene matrix; or
(c): a matrix comprising a mixture of PolyEthylene and PolyPropylene; and
wherein the matrix is present in an amount from 80 % to 99.95% w/w of the polymer composition;
and
an effective amount of at least one active ingredient selected from the group consisting of:
insecticide, acaricide, biocide, synergist, repellant, herbicide, bactericide and bacteriostatic; and
**characterized by** that the composition comprises a polymer oil and/or a polymer wax and the oil and/or wax are selected so:
(i): that the effective amount of the active ingredient has a solubility of at least 5 gram/kg in the suitable oil and/or wax, wherein the solubility is measured at a temperature of 10°C above the melting point of the wax or oil at ambient pressure; and
(ii): the oil and/or wax are also miscible in the matrix; and
wherein the wax or oil is present in an amount from 0.05% to 5% w/w of the polymer composition; and
wherein the effective amount of at least one active ingredient is solubilized in the polymer oil and/or a polymer wax;
and wherein the method is comprising the following steps:
i) solubilizing the effective active ingredient into a liquid form (e.g. after heating) of the polymer oil and/or a polymer wax of claim 1 to get at least 5 gram/kg of the active ingredient dissolved in the liquid oil and/or wax;
ii) heating the PolyEthylene and/or PolyPropylene matrix of claim 1 to get a liquid form of the matrix and then mixing the mixture of step i) into the liquid matrix; and
iii) cooling of the mixture of step ii) to get the polymer composition.

11. The method of claim 10, wherein the polymer composition is the polymer composition of any of claims 1 to 8.

12. A method for manufacturing a textile product comprising first make the polymer composition of any of claims 1 to 8 according to the method of claim 10 or 11 and then make the following subsequent steps:
iv): extruding the polymer composition to get a laminate or yarns; and
v): making the textile product from the laminate or yarns of step iv).

13. The method of claim 12, wherein the textile product is a net comprising an effective amount of insecticide; and
wherein the insecticide net is a mosquito net to protect humans against malaria infections transmitted by malaria mosquitoes.

14. A textile product obtainable by the method for manufacturing a textile product of any of claims 12 to 13.

15. The textile product of claim 14 or any of claims 1 to 8, wherein the textile product has a Tension Strength (Newton) of at least 100 Newton (N) in Warp direction and at least 50 Newton in Weft direction, measured according to ISO 13934-2 standard method for measuring Tension Strength with the minor modification of the ISO method relating to that ISO 13934-2 describes using 2 grabs and 2 hooks, and herein is used 1 grab and 1 hook.

16. The textile product of claim 15, wherein the textile product is a net comprising an effective amount of insecticide and wherein the net has insecticide present on the surface of the net after 15 defined laboratory washes.

## Patentansprüche

1. Textilware umfassend eine Polymerzusammensetzung, wobei die Polymerzusammensetzung folgendes umfasst:
(a) eine Polyethylenmatrix; oder
(b) eine Polypropylenmatrix; oder
(c) eine Matrix umfassend eine Mischung aus Polyethylen und Polypropylen; und wobei die Matrix in einer Menge von 80 bis 99,95 Gew.-% der Polymerzusammensetzung vorhanden ist;
und
eine wirksame Menge von mindestens einem Wirkstoff, der ausgewählt ist aus der Gruppe bestehend aus: Insektizid, Akarizid, Biozid, Synergist, Insektenschutzmittel, Unkrautbekämpfungsmittel, Bakterizid und bakteriostatischem Mittel; und
**gekennzeichnet dadurch, dass** die Zusammensetzung ein Polymeröl und/oder ein Polymerwachs umfasst und das Öl und/oder das Wachs so ausgewählt werden, dass
(i) die wirksame Menge des Wirkstoffes eine Löslichkeit von mindestens 5 g/kg im geeigneten Öl und/oder Wachs aufweist, wobei die Löslichkeit bei einer Temperatur 10 °C oberhalb der Schmelztemperatur des Wachses oder des Öls bei Umgebungsdruck ermittelt wird; und
(ii) das Öl und/oder das Wachs auch in der Matrix mischbar sind; und
wobei das Wachs oder das Öl in einer Menge von 0,05 bis 5 Gew.-% der Polymerzusammensetzung vorhanden sind; und
wobei die wirksame Menge von mindestens einem Wirkstoff im Polymeröl und/oder im Polymerwachs gelöst wird; und
wobei die wirksame Menge des Wirkstoffes von 0,001% bis 5% des Trockengewichts der Polymerzusammensetzung reicht.

2. Textilware nach Anspruch 1, wobei das Öl und/oder das Wachs ein Polyethylenöl und/oder ein Polyethylenwachs und/oder das Öl und/oder das Wachs ein Polypropylenöl und/oder ein Polypropylenwachs oder Mischungen davon sind.

3. Textilware nach einem der Ansprüche 1 oder 2, wobei die Matrix mindestens 60% Polyethylen hoher Dichte (PE-HD) umfasst.

4. Textilware nach Anspruch 3, wobei das Öl und/oder das Wachs ein Polyethylenöl und/oder ein Polyethylenwachs ist.

5. Textilware nach einem der vorhergehenden Ansprüche, wobei das Wachs in einer Menge von 0,05 bis 5 Gew.-% der Polymerzusammensetzung vorhanden ist.

6. Textilware nach einem der vorhergehenden Ansprüche, wobei der Wirkstoff ein Insektizid ist und das Insektizid ausgewählt aus der Gruppe bestehend aus Pyrehtroiden, Organophosphaten und Carbamaten ist; und
wobei die wirksame Menge des Insektizids von 0,001% bis 5% des Trockengewichts der Polymerzusammensetzung reicht.

7. Textilware nach einem der vorhergehenden Ansprüche, wobei die Matrix von 1 bis 20% Polyethylen niedriger Dichte (LDPE), LLDPE (lineares Polyethylen niedriger Dichte) oder Polyethylen mittlerer Dichte (MDPE) oder eine Mischung davon enthält.

8. Textilware nach einem der Ansprüche 5 bis 7, wobei
die Matrix mindestens 85% Polyethylen höherer Dichte (HDPE) und von 3 bis 7% Polyethylen niedriger Dichte (LDPE) enthält; und
wobei das Wachs in einer Menge von 0,5 bis 1,5 Gew.-% der Polymerzusammensetzung vorhanden ist; und
wobei die wirksame Menge von Deltamethrin von 0,1% bis 1 % des Trockengewichts der Polymerzusammensetzung reicht.

9. Verwendung eines Polymeröls und/oder eines Polymerwachs nach Anspruch 1 zur Kontrolle der Freisetzung von Wirkstoffen in einer Polymerzusammensetzung nach einem der vorhergehenden Ansprüche.

10. Verfahren zur Herstellung einer Polymerzusammensetzung, wobei die Polymerzusammensetzung folgendes umfasst:
(a) eine Polyethylenmatrix; oder
(b) eine Polypropylenmatrix; oder
(c) eine Matrix umfassend eine Mischung aus Polyethylen und Polypropylen; und wobei die Matrix in einer Menge von 80 bis 99,95 Gew.-% der Polymerzusammensetzung vorhanden ist;
und
eine wirksame Menge von mindestens einem Wirkstoff, der ausgewählt ist aus der Gruppe bestehend aus: Insektizid, Akarizid, Biozid, Synergist, Insektenschutzmittel, Unkrautbekämpfungsmittel, Bakterizid und bakteriostatischem Mittel; und
**gekennzeichnet dadurch, dass** die Zusammensetzung ein Polymeröl und/oder ein Polymerwachs umfasst und das Öl und/oder das Wachs so ausgewählt werden, dass
(i) die wirksame Menge des Wirkstoffes eine Löslichkeit von mindestens 5 g/kg im geeigneten Öl und/oder Wachs aufweist, wobei die Löslichkeit bei einer Temperatur 10 °C oberhalb der Schmelztemperatur des Wachses oder des Öls bei Umgebungsdruck ermittelt wird; und
(ii) das Öl und/oder das Wachs auch in der Matrix mischbar sind; und
wobei das Wachs oder das Öl in einer Menge von 0,05 bis 5 Gew.-% der Polymerzusammensetzung vorhanden ist; und
wobei die wirksame Menge von mindestens einem Wirkstoff im Polymeröl und/oder im Polymerwachs gelöst wird;
und wobei das Verfahren folgende Schritte umfasst:
i) das Lösen des wirsksamen Wirkstoffes in einer flüssigen Form (z.B. nach Erwärmung) des Polymeröls und/oder eines Polymerwachses nach Anspruch 1 um mindestens das Lösen von 5 g/kg des Wirkstoffes im flüssigen Öl und/oder Wachs zu erreichen;
ii) Erwärmung der Polyethylenmatrix und/oder der Polypropylenmatrix nach Anspruch 1 um eine flüssige Form der Matrix zu erhalten gefolgt von Beimischung der Mischung von Schritt i) in die flüssige Matrix; und
iii) Abkühlung der Mischung von Schritt ii) um die Polymerzusammensetzung zu erhalten.

11. Verfahren nach Anspruch 10, wobei die Polymerzusammensetzung die Polymerzusammensetzung nach einem der Ansprüche 1 bis 8 ist.

12. Verfahren zur Herstellung einer Textilware umfassend erst die Herstellung der Polymerzusammensetzung nach einem der Ansprüche 1 bis 8 gemäß dem Verfahren nach Anspruch 10 oder 11 gefolgt von den darauffolgenden Schritten:
iv) das Extrudieren der Polymerzusammensetzung um ein Laminat oder Garne zu erhalten; und
v) die Herstellung der Textilware aus dem Laminat oder aus den Garnen vom Schritt iv).

13. Verfahren nach Anspruch 12, wobei die Textilware ein Netz ist, das eine wirksame Menge von Insektizid umfasst; und
wobei das Insektizidnetz ein Mückennetz ist, welches die Menschen vor Malariainfektionen schutzt, die durch Malariamücken übertragen werden.

14. Textilware, die anhand des Verfahrens zur Herstellung einer Textilware nach einem der Ansprüche 12 oder 13 erhalten werden kann.

15. Textilware nach Anspruch 14 oder nach einem der Ansprüche 1 bis 8, wobei die Textilware eine Zugkraft (Newton) von mindestens 100 Newton (N) in Kettrichtung und mindestens 50 Newton in Schussrichtung aufweist, gemessen nach dem ISO 13934-2-Standardverfahren zur Bestimmung der Zugkraft, mit einer geringfügigen Änderung bezüglich des ISO-Verfahrens, indem nach ISO 13934-2 2 Greifen und 2 Haken verwendet werden und hierin 1 Greife und 1 Haken verwendet werden.

16. Textilware nach Anspruch 15, wobei die Textilware ein Netz ist, welches eine wirksame Menge von Insektizid umfasst und wobei das Netz Insektizid auf deren Oberfläche nach 15 definierten Waschvorgängen im Labor vorhanden hat.

## Revendications

1. Produit textile comprenant une composition polymère, dans laquelle la composition polymère comprend:
(a): une matrice de polyéthylène, ou
(b): une matrice de polypropylène, ou
(c): une matrice comprenant un mélange de polyéthylène et de polypropylène, et
dans lequel la matrice est présente en une quantité de 80% à 99,95% en poids / poids de la composition polymère;
et
une quantité efficace d'au moins un ingrédient actif choisi dans le groupe constitué par: un insecticide, un acaricide, biocide, agent synergique, répulsif, herbicide, bactéricide et bactériostatique, et
**caractérisé en ce que** la composition comprend une huile de polymère et / ou d'une cire polymère et de l'huile et / ou de la cire sont choisis de telle sorte:
(i): que la quantité efficace de l'ingrédient actif a une solubilité d'au moins 5 g / kg dans l'huile appropriée et / ou de la cire, dans lequel la solubilité est mesurée à une température de 10 ° C supérieure au point de fusion de la cire ou de l'huile à la pression ambiante, et
(ii): l'huile et / ou de la cire sont également miscible dans la matrice, et
dans lequel la cire ou de l'huile est présente en une quantité de 0,05% à 5% en poids / poids de la composition polymère, et
dans lequel la quantité efficace d'au moins un principe actif est solubilisé dans l'huile de polymères et / ou d'une cire polymère, et
dans lequel la quantité efficace de l'ingrédient actif est de 0,001% à 5% de matière sèche en poids / poids de la composition polymère.

2. Le produit textile selon la revendication 1, dans lequel l'huile et / ou de la cire est une huile de polyéthylène et / ou de la cire et / ou de l'huile et / ou de la cire est une huile de polypropylène et / ou une cire ou leur mélange.

3. Le produit textile de la revendication 1 ou 2, dans lequel la matrice comprend au moins 60% de polyéthylène haute densité (HDPE).

4. Le produit textile de la revendication 3, dans lequel l'huile et / ou de la cire est une huile de polyéthylène et/ ou de la cire.

5. Produit textile selon l'une quelconque des revendications précédentes, dans lequel la cire est présente en une quantité de 0,05% à 5% en poids / poids de la composition polymère.

6. Produit textile selon l'une quelconque des revendications précédentes, dans lequel l'ingrédient actif est un insecticide et l'insecticide est choisi dans le groupe constitué par les pyréthroïdes, les organophosphates et les carbamates, et dans lequel la quantité efficace de l'insecticide est de 0,001% à 5% en poids sec, / poids de la composition de polymère.

7. Le produit textile de l'une des revendications précédentes, dans lequel la matrice comprend de 1 à 20% de polyéthylène basse densité (LDPE), LLDPE (polyéthylène linéaire basse densité) ou à densité moyenne polyéthylène (MDPE) ou un mélange de ceux-ci.

8. Le produit textile revendications 5 à 7, dans lequel la matrice comprend au moins 85% de polyéthylène haute densité (HDPE) et de 3 à 7% de polyéthylène basse densité (LDPE), et dans lequel la cire est présente en une quantité de 0,5% à 1,5% p / p de la composition de polymère, et dans lequel la quantité efficace de la deltaméthrine est de 0, 1 % à 1 % de matière sèche en poids / poids de la composition polymère.

9. Utilisation d'une huile polymère et / ou une cire polymère selon la revendication 1 pour le contrôle de la libération de principes actifs dans une composition polymère selon l'une des revendications précédentes.

10. Procédé de fabrication d'une composition de polymère, dans lequel la composition de polymère comprend:
(a): une matrice de polyéthylène, ou
(b): une matrice de polypropylène, ou
(c): une matrice comprenant un mélange de polyéthylène et de polypropylène, et
dans lequel la matrice est présente en une quantité de 80% à 99,95% en poids / poids de la composition polymère;
et
une quantité efficace d'au moins un ingrédient actif choisi dans le groupe constitué par: un insecticide, un acaricide, biocide, agent synergique, répulsif, herbicide, bactéricide et bactériostatique, et
**caractérisé en ce que** la composition comprend une huile de polymère et / ou d'une cire polymère et de l'huile et / ou de la cire sont choisis de telle sorte:
(i): que la quantité efficace de l'ingrédient actif a une solubilité d'au moins 5 g / kg dans l'huile appropriée et / ou de la cire, dans lequel la solubilité est mesurée à une température de 10 ° C supérieure au point de fusion de la cire ou de l'huile à la pression ambiante, et
(ii): l'huile et / ou de la cire sont également miscible dans la matrice, et
dans lequel la cire ou de l'huile est présente en une quantité de 0,05% à 5% en poids / poids de la composition polymère, et
dans lequel la quantité efficace d'au moins un principe actif est solubilisé dans l'huile de polymère et / ou une cire polymère;
et dans lequel le procédé est comprenant les étapes suivantes:
i) solubiliser le principe actif efficace en une forme liquide (par exemple après chauffage) de l'huile de polymère et / ou une cire polymère selon la revendication 1 pour obtenir au moins 5 g / kg de l'ingrédient actif dissous dans l'huile liquide et / ou de la cire ;
ii) le chauffage de la matrice de polyéthylène et / ou polypropylène selon la revendication 1 pour obtenir une forme liquide de la matrice, puis le mélange du mélange de l'étape i) dans la matrice liquide, et
iii) refroidissement du mélange de l'étape ii) pour obtenir la composition polymère.

11. Procédé selon la revendication 10, dans lequel la composition de polymère est la composition de polymère selon l'une quelconque des revendications 1 à 8.

12. Procédé de fabrication d'un produit textile comprenant un premier rendre la composition polymère selon l'une quelconque des revendications 1 à 8, selon le procédé de la revendication 10 ou 11, puis effectuer les étapes ultérieures suivantes:
iv) l'extrusion de la composition de polymère pour obtenir un stratifié ou des fils, et
v): la fabrication du produit textile à partir du stratifié ou fils de l'étape iv).

13. Procédé selon la revendication 12, dans laquelle le produit textile est un filet comprenant une quantité efficace d'insecticide, et dans laquelle le filet de l'insecticide est une moustiquaire pour protéger les humains contre les infections de paludisme transmises par les moustiques vecteurs du paludisme.

14. Un produit textile obtenu par le procédé de fabrication d'un produit textile selon l'une quelconque des revendications 12 à 13.

15. Le produit textile selon la revendication 14 ou l'une quelconque des revendications 1 à 8, dans laquelle le produit textile a une résistance à la tension (Newton) d'au moins 100 Newton (N) dans le sens chaîne et au moins 50 Newtons dans le sens de la trame, mesurée selon la norme ISO 13934 -2 méthode standard pour mesurer la tension Force avec la modification mineure de la méthode ISO relatives à l'ISO 13934-2 décrit l'utilisation de 2 grappins et 2 crochets, et ce document est utilisé 1 pince et 1 crochet.

16. Produit textile selon la revendication 15, dans lequelle le produit textile est un filet comprenant une quantité efficace d'un insecticide et dans laquelle le filet a de l'insecticide présent à la surface du filet, après 15 lavages définis en laboratoire.
